# EUROPEAN PATENT APPLICATION

(11) **EP 0 841 637 A2**
(43) Date of publication of application: **13.05.1998**
(21) Application number: 97308954.3
(22) Date of filing: 07.11.1997
(51) Int. Cl.: G06T 9/00

(54) **System and method for adaptive animation compression**

(30) Priority: 07.11.1996 US 745931
(71) Applicant: BRODERBUND SOFTWARE, INC., Novato, CA 94948-6121 (US)
(72) Inventor: Ahn, Esteban, San Francisco, California 94116 (US)
(74) Representative: Horner, David Richard

(57) **Abstract**

The present invention provides a compression-decompression technique used for processing a frame of data in multimedia animation, comprising the steps of:
setting a predetermined criteria;
creating a sprite based frame related to said data;
performing a pixel-by-pixel comparison of said data with a preceding frame for creating a frame differences based frame;
determining a first data rate of said sprite based frame and a second data rate of said frame differences based frame;
comparing said first and said data rates to said predetermined criteria; and
selecting one of said sprite based frame and said frame differences based frame as a compressed frame.

By this approach, systems and methods of the present invention can provide adaptive animation compression.

## Description

### Field of the Invention

This invention relates to multimedia systems, and more particularly to systems and methods for adaptive animation compression.

### Background of the Invention

When computers were first developed, they were very expensive. As a result, only large research institutions and corporations could afford to buy them. Consequently, computers were primarily being used to solve scientific problems (e.g., stimulating the behavior of fluid) and support business operations of large corporations (e.g., processing accounting and customer records of insurance companies). The software programs designed for these purposes communicate with users using numbers and text. The users of these software programs were technically trained, and were confortable in such environment. Thus, there were little needs for these programs to present information in graphic or image forms.

During the past few years, the price of computers decreased drastically. Computers are now purchased by many homes and small businesses. The users of these computers are more comfortable in dealing with multimedia environments involving a combination of graphics, text, images, animation, sound, etc. As a result, various multimedia hardware and software components (such as sound cards, video cards, CDROM readers, game software, educational software, etc.) were rapidly developed. Currently, many computers on the market are sold with a CDROM reader, high quality sound card, and high resolution video card and monitor. These computers are sometimes called "multimedia computers."

A growing number of these multimedia computers are equipped with network access devices (e.g., modems) that connect the computers to networks, such as the Internet. An important protocol in the Internet is the World Wide Web (the "Web"). It is a wide-area hypermedia information retrieval system aimed to give universal access to a large universe of documents. The documents could contain (or link to) graphic, text, audio*,* or video files. Thus, a large number of multimedia data needs to be transported across the Internet.

One characteristic of multimedia software applications data is that their data is much larger than character-based data. As an example, a single 480 by 640 pixel image in 324-bit color has a size of about 1.2 Megabytes ("Mbytes"). A piece of sound of 10 seconds duration could take up half a Mbyte of storage. In contrast, a one page document stored as ASCII text takes just a few kilobytes ("Kbytes").

One type of multimedia software applications involves a digital movie, an example of which is animation. Animations are made up of a sequence of frames. Each frame is created from layered shapes. In order to create a sense of continuity, the application typically displays a predetermined number of frames per second (e.g., 30 frames per second). As pointed out above, the size of each frame could be about 1.2 Mbytes of data. Thus, an animation of a few minutes could require hundreds of Mbytes of data.

One of the methods to reduce the size of multimedia data is to use compression and decompression ("codec") software tools. The multimedia data is first compressed to a small size by a compressor. The compressed data is then recorded in a storage device (e.g., CDROM or a network server used in a local area network or the Internet) and distributed to customers. When a customer wishes to play the application, the compressed data is retrieved from the storage medium and loaded into random access memory (RAM). The data is then decompressed and played by the customer's computer.

Two important types of codecs are sprite based codec and frame differences based codec. In a typical sprite based codec, commonly used images (e.g., the "castmembers" of animation) are stored in RAM. To draw a castmember at a certain position on a monitor, an application only needs to provide to the codec an identification number for the castmember and the desired coordinate. The total amount of data needed to represent the castmember in this frame is just a few bytes instead of several Kbytes of data needed to draw the image of the castmember. Thus, a very high compression ratio can be achieved for a certain type of frames. As a result, the size of the compressed data is small, and thus the amount of data needed to be transferred from the storage medium to RAM is also small. Consequently, the required data rate is low. Thus, this codec is very efficient in terms of data rate. However, the amount of pixels needed to be drawn per frame is large because all the castmembers appearing in a frame need to be redrawn. As a result a large number of pixels need to be drawn (i.e., the pixel rate is high). Thus, this codec is not efficient in term of pixel rate.

In a frame differences based codec, only the pixels that change between consecutive frames (i.e., the differences between two frames) are stored. During decompression, a new frame is drawn by drawing the differences on a computer monitor. Typically, the compression ratio of frame differences based codec is not as high as the sprite based codec. Thus, it is not efficient in terms of date rate. However, there is no need to redraw the whole image (e.g., the castmember in the sprite based codec), if there are only minor changes in the appearance of the image (e.g., only the mouth of the castmember is changed). Thus, it is very efficient in terms of pixel rate.

The example given above illustrates that various codecs have different characteristics. Prior art multimedia applications use the same codec for all the frames in a digital movie. However, it is difficult to have a codec which can generate optimal result for all the frames in a movie.

### Summary of the Invention

Features and aspects of the present invention are set out in the appended claims.

The system or method of the present invention can select either a frame differences based system or a sprite based system based on predetermined criteria, thereby allowing adaptive animation compression.

In accordance with the present invention, a digital movie system (such as animation and digital video) can be provided in which each frame can be compressed using a different compression algorithm. It is observed that different compression algorithms have different advantages and drawbacks. Consequently, tailoring an appropriate compression algorithm to each frame can greatly improve the performance of a multimedia system.

In one ebodiment of the present invention, the data size and/or the number of pixels to be drawn is used to select the compression used. The data size affects the amount of time needed to transfer data from a storage medium to system RAM. The number of pixels to be drawn (i.e., pixel rate) effects the number of CPU cycles needed to put a frame on the screen of a computer. Some compression algorithms generate compressed data having a small data size; however, the pixel rate may be high. An example is a sprite based compression algorithm. Other compression algorithms generate compressed data having a small pixel rate; however, the data size may be large. An example is a frame differences based compression algorithm. By using an appropriate compression algorithm for each frame, the performance of a multimedia system can be improved.

In an embodiment of the present invention, each frame in a digital movie is compressed using a sprite-based and then a frame differences-based compression algorithm. The results of these compression algorithms are compared to a predefined criterion. The compressed frame from the algorithm which best matches this criterion is chosen for this frame. The other compressed frame is discarded. Thus, the compressed movie consists of frames compressed using different compression algorithms. During decompression, each compressed frame is decompressed using the appropriate decompression algorithm.

These and other features of the present invention will become apparent from the following detailed description of embodiments of the invention read in conjunction with the accompanying drawings.

### Brief Description of the Drawings

Figs. 1A-1C are diagrams illustrating a conventional frame differences based method.

Fig. 2 is a flow chart showing an embodiment of the present invention.

Figs. 3A and 3B are diagrams illustrating the use of pixel-by-pixel comparison in a sprite based method.

Fig. 4 is a block diagram of a computer system that can be used to implement an embodiment of the present invention.

Fig. 5 is a schematic diagram showing an embodiment of the present invention using QuickTime.

Fig. 6 is a block diagram of a network system that can be used to implement an embodiment of the present invention.

### Detailed Description of Embodiments of the Invention

Preferred embodiments of the present invention provide a novel multimedia compression and decompression system and related methods. The following description is presented to enable any person skilled in the art to make and use the invention. Descriptions of specific applications are provided only as examples. Various modifications to the preferred embodiments will be readily apparent to those skilled in the art, and the general principles defined herein may be applied to other embodiments and applications without departing from the spirit and scope of the invention. Thus, the present invention is not intended to be limited to the embodiments shown, but is to be accorded the widest scope consistent with the principles and features disclosed herein.

In order to understand the embodiments of the present invention, a prior art sprite based and frame differences based codec are described. Animations are made up of a sequence of frames created from layered shapes. In sprite based compression the images of a collection of "sprites" are prepared and stored. These sprites are assigned identification information. If a sprite appears on a layer, it is sufficient to provide the identity of the sprite and its position on the layer. There is no need to provide the full images of the selected sprite. As a result, only a few bytes may be sufficient to describe the sprite (while more than a Kbyte may be needed if it is necessary to provide the image). When it is necessary to display the sprite, the image is retrieved from storage and painted on a monitor at a preassigned position.

In painting a layer, sprites need to be painted one at a time. If sprites exist in a previous frame, the preexisting sprites need to be erased (by painting background color over them) and new sprites need to be painted. When these paintings are performed directly on a screen of a monitor, a noticeable flicker would occur because the color of the pixels would be changed repeatedly from one color to another in a way similar to strobe light. Consequently, in a sprite based compression system, drawing of images for each frame is first performed on an offscreen buffer and then copy to the screen of a monitor.

In summary, sprite based codec requires at least three steps to reassemble each frame:
1) Erase differences: erase (e.g., paint to the background color) the areas in the offscreen buffer where the reassembled frame will be different from the previous frame.
2) Draw sprites: draw new sprites in the offscreen buffer.
3) Transfer to screen: copy the contents of the offscreen buffer to the screen.

Because of the need to draw every sprite and the use of the three-step process, the amount of computer resource devoted to drawn is large.

The advantage of sprite based codec is that it works well with animations where sprites are often reused. In these animations, the sprites are loaded from an external storage device (e.g., CDROM or network server) into RAM once, and can be used repeatedly without a need to load again from the storage medium.

Frame differences based codec requires only one step in decompression: drawing the differences between frames to the screen. This step can be carried out by direct screen drawing, i.e., there is no need to draw to an offscreen buffer. Flicker is not a problem here because the color of the affected pixels are changed only once from one frame to anther. Consequently, little computer resource (e.g., CPU cycles and temporary buffer space) is required to decompress and draw the data.

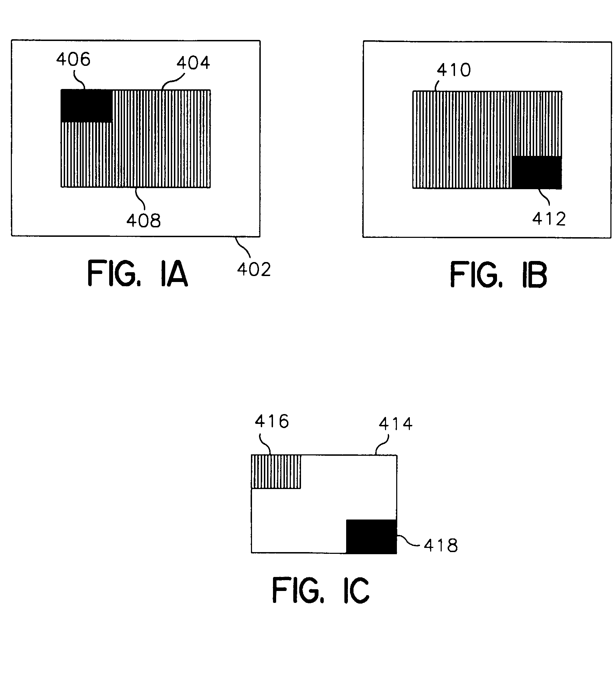

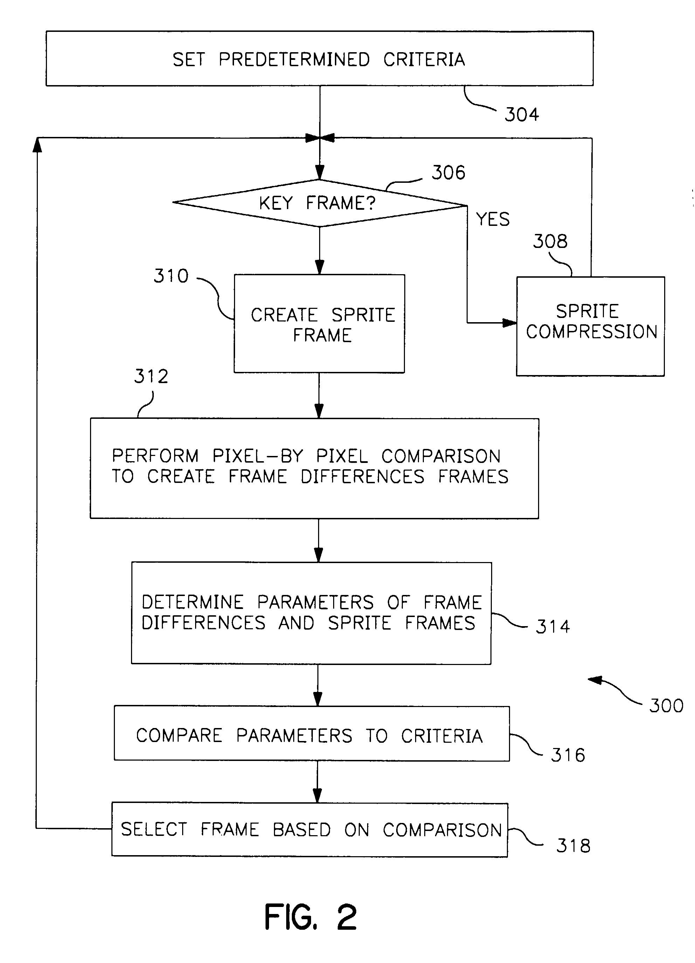

An example of a frame difference based method is shown in Fig. 1A-1C. Fig. 1A shows a window 404 displayed on a screen 402. Window 404 contains a rectangular shape 406 having a solid pattern painted on a background pattern 408. Fig. 2B shows a window 410 with a shape 412 painted on a different position. Window 410 could have the same size and shape as window 404 and shape 412 could have the same size and shape as shape 406. One way to change window 404 of Fig. 1A to that of Fig. 1B is to create a window 414 containing a rectangular shape 416 having a background pattern and another rectangle shape 418 having a solid pattern (see Fig. 1C). The size and shape of shapes 416 and 418 are the same as that of shapes 406 and 412, respectively. When window 414 is painted on top of window 404, the result is the same as window 410. The painting of window 414 does not give rise to flickering because there are no repeated changes of color. As a result, there is no need to use an offscreen buffer.

One method to generate window 414 is by performing a pixel-by-pixel comparison of window 402 and the yet-to-be-drawn window 410. This method is well known by persons skilled in the art.

Frame differences based codec can also be used in situations where an offscreen buffer is used. The improvement in pixel rate over sprite based compression for the case where an offscreen buffer is required is not as great as the case where direct screen drawing is possible. However, frame differences based codec could still be more efficient than sprite based codec in terms of pixel rate because not all sprites need to be completely redraw.

Frame differences based codec typically has large data size. As an example, consider a case where the same shape is moved one pixel from one frame to another while the background is static. In this case, a large number of pixels are affected from one frame to another if the size of the moving shape is large. The data for the affected pixels need to be loaded from a storage medium to the RAM. As a result, the bandwidth requirement for data transfer is high. On the other hand, sprite based compression involves assigning a new coordinate to the shape (which may require just a few bytes of data).

Another drawback of frame differences method is that difference's frames depend on and use information already contained in a previous frame. However, there are frames, such as "key" frames, which are not dependent on any previous frame. As a result, the key frame can be very large in terms of data rate (i.e., a large amount of data needs to be loaded into RAM) and pixel rate (i.e., a large number of pixels needs to be drawn on a screen) if frame differences based compression is used. In order to handle this situation, some digital movie systems, such as Apple Computer's QuickTime, skip or drop frames so as to keep graphics in sync with audio. The result is that animation becomes jerky.

One aspect of embodiments of the present invention involves developing a codec that can select, on a frame by frame basis, the best compression algorithm for each frame. As a result, the advantages of these algorithms are utilized while avoiding their defects. In embodiments of the present invention, each frame is compressed using both a sprite based compression algorithm and a frame differences based compression algorithm. These two results are compared to a predetermined criterion. The selected frame is a frame compressed using either the sprite based or the frame differences based algorithm, depending on the result of the comparison. Thus, improved performance can be achieved.

In one embodiment of the present invention, the data size and/or the number of pixels to be drawn are used to select the compression algorithm. An example to use data size alone is based on the observation that a frame compressed using frame differences codec is always faster to draw since there are fewer drawing steps. Thus, if the data size of sprite based compression is the same or less than the data size of frame differences based compression, the frame differences based compression is the optimal compression type. Thus, the choice between the two compression types is based on the data size only. Sometimes a data rate is not a concern. In this case, the data size is not the determining factor. For instance, if using frame differences based compression results in 10% more data but 50% less drawing time than using sprite based compression, frame differences based compression may be selected even if the data size is larger because of the reduction in drawing time. In this case, a ratio of the data rate and pixel rate may be used to select the optimal compression type. Further, this ratio is preferably user selectable because different data delivery systems (e.g., CDROM or the Internet) have different bandwidths.

Fig. 2 is a flow chart 300 showing the compression operation of preferred embodiments of the present invention. At step 304, predetermined criterion for selecting the compression type is entered (e.g., by a software developer). A frame is examined to determined if it is a key frames (step 306). If it is a key frame, a sprite based compression algorithm is used (step 308). Flow chart 300 then branches back to step 306 to examine the next frame. If the frame is not a key frame, the frame is compressed using a sprite based algorithm (step 310) and then a frame differences based algorithm (step 312). A pixel-by-pixel comparison is preferably performed in step 312. Note that the order of performing steps 310 and 312 are not important. In step 314, relevant parameters of compression using these two algorithms are determined (e.g., data size and pixel rate). In step 316, the parameters are compared to the predetermined criterion. In step 318, one of the two compressed frames is selected based on the comparison in step 316. The selected frame will represent the data for this frame and is stored in a storage medium. The other compressed frame is discarded. A field in the data is reserved to indicate the selected compression type. Flow chart 300 then branches back to step 306 to examine the next frame.

At decompression time, the above described field in each frame is examined to determine its compression type. The frame is then decompressed accordingly.

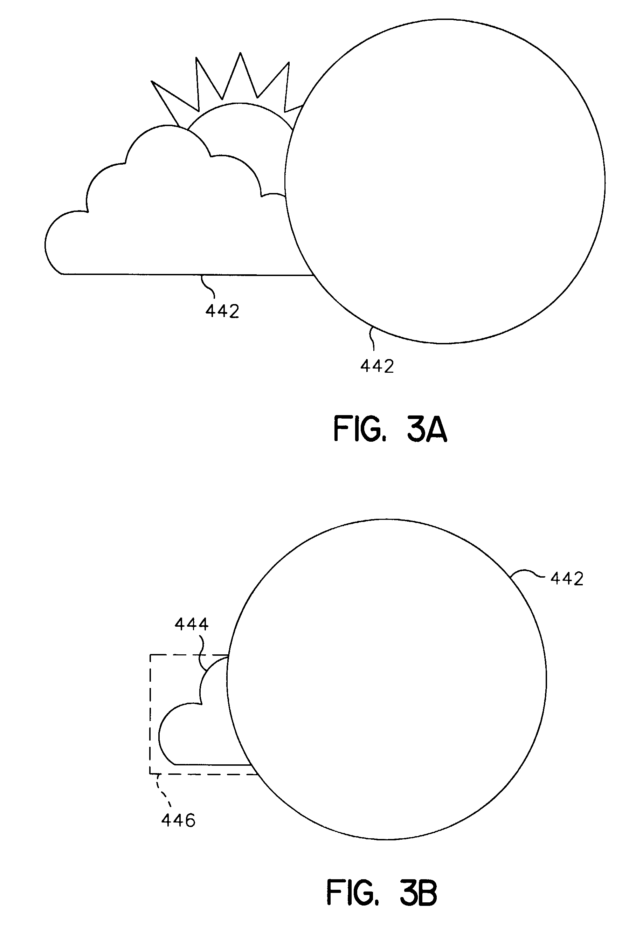

One aspect of embodiments of the present invention is that the pixel-by-pixel comparison performed in step 312 can be used to reduce the decompression time of the sprite based algorithm. This is illustrated in Figs. 3A-3B. Fig. 3A shows two sprites 442 and 444 with minor overlapping. Fig. 3B shows the same sprites, except that sprite 442 overlaps and hides most parts of sprite 444. Only a small part of sprite 444 (shown enclosed by a dashed box 446) appears on a screen. If a convention sprite based method is used, the whole image of sprite 442 and 444 need to be painted, one at a time onto an offscreen buffer. However, once a pixel-by-pixel comparison has been performed, it is easy to realize that only a small part of sprite 444 needs to be painted to show the screen of Fig. 3B. Consequently, the painting of sprite 444 can stop once the portion in box 446 is completed. As a result, there could be significant saving in computer resource. The information related to box 446 can be passed to a decompressor in a convenient manner (e.g., in a frame data sample, which is a variable length structure that has a standardized header which tells what kind of data chunk(s) follow)

The pixel-by-pixel comparison can also be used to create new sprites so as to reduce the data and pixel rates. Referring back to Figs. 3A and 3B, it is assumed that the frame also contains an airplane flying in front of sprites 442 and 444. The airplane is recorded as an independent sprite and painted on a separate layer. In this embodiment, a new composite sprite of sprites 442 and 444 can be created using the result of pixel-by-pixel comparison. In decompression, this new composite sprite can be painted as one layer. The airplane can then be painted as a separate layer. As a result, the performance of the system is improved.

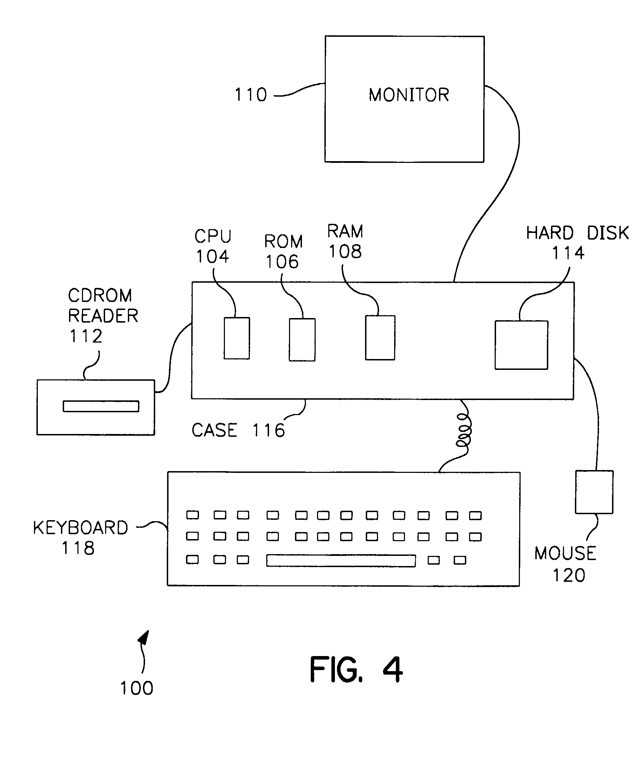

Fig. 4 is a block diagram of a computer system 100 that can be used to implement the present invention. Computer system 100 contains a CPU 104, read only memory (ROM) 106, RAM 108, a monitor 110, a CDROM reader 112, a hard disk 114, and devices for allowing a user to enter input, such as a keyboard 118 and a mouse 120. A case 116 is used to contain CPU 104, ROM 106, RAM 108 and hard disk 114. In operation, a user inserts a CDROM (not shown) containing software and data incorporating an embodiment of the present invention into CDROM reader 112. Keyboard 118 or mouse 120 is used to cause computer system 100 to execute a desired application associated with the CDROM. Reader 112 transfers data contained in the CDROM into RAM 108 for execution by CPU 104.

As a means to illustrate embodiments of the present invention, a specific computer system, an Apple Macintosh-based computer, is used as computer system 100. The Macintosh computer is controlled by an operation system stored in ROM 106 and hard disk 114. It contains many software tools to help software developers to develop multimedia applications. The preferred embodiment of this present invention uses these tools because it is the most efficient way to develop applications. Other kinds of computer systems, such as Microsoft Windows executing on an Intel-based computer, also provide similar tools. They can be used to develop products incorporating the present invention. Alternatively, a developer can develop its own tools.

An exemplary application is an animation application. This application uses a software product named "QuickTime," which is developed by Apple Computer, Inc., as a vehicle to develop and play movie data. QuickTime is a cross-platform streaming video technology. In this application, the term "streaming" means data is loaded as it plays. In order to optimize the performance of a computer, QuickTime loads a little bit ahead of where it is playing.

Most multimedia applications use a codec to reduce the size of animation, video and graphic data. Quicktime contains several built-in codecs, and also allows developers to substitute their own codec for the built-in codecs. Embodiments of the present invention can be implemented as a codec in place of QuickTime's built-in codecs.

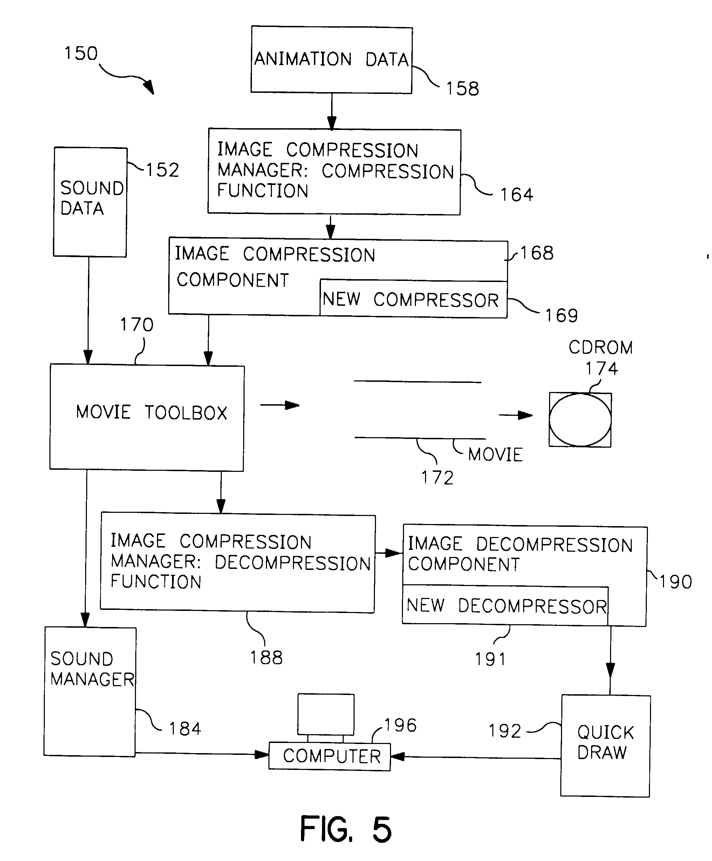

Fig. 5 is a schematic diagram of a movie recording and playback system 150 using QuickTime. The details of QuickTime are disclosed in two publications entitled "Inside Macintosh: QuickTime" and "Inside Macintosh: QuickTime Components," both are members of the "Apple Technical Library" and published by Addison-Wesley Publishing Company. These two books are incorporated herein by reference.

In QuickTime, a set of time-based data is referred to as a "movie." This set of data is not restricted to sound or video, but could be financial data, laboratory data or other time-dependent data. Thus, a QuickTime movie is a continuous stream of time-dependent data which may come from different sources. In the present example, this stream of data comprises frames in an animation.

QuickTime contains a plurality of components. A component is a code resource that is registered by a "Component Manager" of a Macintosh computer system. Each component supports a defined set of features and presents a specified application program interface (API) to its clients' applications. Applications are thereby isolated from the details of implementing and managing a given technology. For example, a software developer can use a compression component to perform compression without having to know how to write codes to implement a compression algorithm.

Fig. 5 shows a compression function 164 of an image compression manager that accepts movie data (such as animation data 158). The image compression manager provides applications with a common interface for compressing and decompressing images and sequence of images (e.g., animation). It also provides several compression and decompression options, thereby allowing developers to choose the appropriate tool for a particular result. Further, it is possible for a developer to use its own codec, if the codecs in QuickTime do not meet the requirements of the developer.

The compression function 164 of the image compression manager compresses images by invoking an image compression component 168. The image compression manager also contains a decompression function 188, which can decompress images during playback by invoking an image decompression component 190. These two components are code resources that present a standard interface to the image compression manager and provide respective image-compression and image-decompression services. Image compression component 168 and image decompression component 190 could be supplied by the developer. An image compression manager data structure called "CodeNameSpec" can be used by developers to identify the name of its codec component.

In the preferred embodiment, codec components especially designed for preferred embodiments of the present invention are used. These components are designed to compress and decompress (depending on whether a compression or decompression component is used) each frame of anination data using the most appropriate algorithm for that frame. The flow chart to implement the compressor component has been disclosed in Fig. 2. The implementation of the decompressor has also been described above. Fig. 5 shows a new compressor 169 and a new decompressor 191 which contain code resource to implement the algorithm of the present invention. As explained above, a field in the data is reserved to indicate the selected compression type.

Another tool provided by QuickTime is a movie toolbox, shown as reference numeral 170 in Fig. 5. It provides functions that allow applications to control all aspects of creation and playing of movies in Macintosh computer applications. The following are examples of some of the functions:
(1) NewMovie: creates a new movie in memory.
(2) NewMovieTrack; creates a new movie track.
(3) NewTrackMedia: creates a new media for a track.
(4) NewMovieFromFile: creates a movie in memory from a resource that is stored in a movie file.
(5) ConvertFiletoMovieFile: takes a specified file and converts it to movie file.
(6) StartMovie: starts the movie playing from the current movie time.
(7) AddMediaSample: adds sample data and a description to a media.
(8) GetMediaSample: returns a sample from a movie data file.

In Fig. 5, movie toolbox 170 accepts sound data 152 and animation data compressed by new compressor 169. In many animation applications, sound data is not compressed. Movie toolbox 170 creates a movie 172 based on these data, and the movie is recorded on CDROM 174. Movie toolbox 170 is also used to retrieve the movie previously recorded on CDROM 174 for playback.

The playback part of system 150 is now described. Movie toolbox 170 retrieves movie 172 from CDROM 174. It recovers audio data from the sound track in the movie. The audio data is delivered to a sound manager 184, which causes computer 196 to play sound in accordance with the audio data. The compressed animation data is delivered to decompression function 188 of the image compression manager. Decompression function 188 calls image decompression component 190. In the present embodiment, new decompressor 191 is called to decompress the data because it is able to invoke different algorithms for each frame. New decompressor 191 can determine the type of compression algorithm used in creating a frame based on the above described special field. The decompressed data is routed to Macintosh's Quick Draw routine 192 (or other proprietary drawing routines), which draws an image on computer 196.

It can be seen from the above that the system shown in Fig. 5 is capable of choosing an appropriate compressor/decompressor for each frame of a movie.

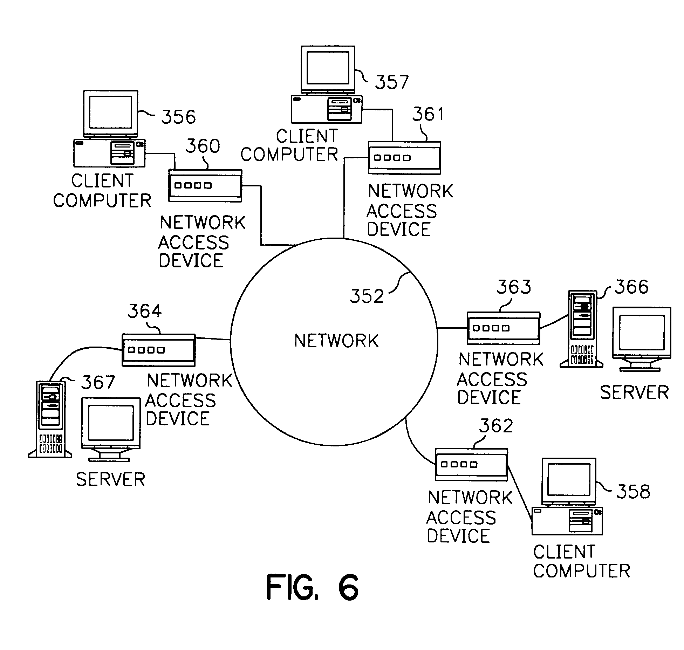

The implementation of the present invention in a network system (local area network or the Internet) in preferred embodiments is now described. Fig. 6 is a drawing showing a network system 350 that can be used to implement the present invention. System 350 contains a data communication network 352, which could be a local area network or a wide area network System 350 also contains a plurality of client computers (such as computers 356-358) and a plurality of server computers (such as servers 366 and 367). These computers are connected to network 352 using a plurality of network access devices 360-364 (such as moderns for connecting the client's computers to dial-up lines and channel service units for connecting the server computers to T1 lines). Preferably, the compressed frames are stored in the servers. The compressed frames will be delivered to the client computers either at a predetermined time or upon request. Upon receiving the data, the clients' computers play the movie.

The structure of the clients' computers and the servers could be similar to computer system 100 of Fig. 4. Typically, a server is more powerful (in terms of storage capability and processing power) than the clients' computers. The network access devices are conventional devices for connecting the computers (servers and clients) to the data communication network, and thus will not be described in detail here.

In one embodiment of the present invention, the compression of the frames can be performed either at the sites of the servers or at a site outside of network system 350. The frames are then stored in one or more servers. Even though the compression could be created and stored in the site of a client computer, it is generally not the preferred way because the processing power and human resource at client sites are relatively limited.

When a client computer wishes to play the animation, it sends a request, e.g., using a hypertext transport protocol (HTTP) in the Web, to a server which stores the movie. The frames are then transmitted to the requesting clients' computer. The clients' computer then decompresses and plays the frames.

The invention has been described with reference to specific exemplary embodiments thereof. Various modification and changes may be made thereunto without departing from the broad spirit and scope of the invention. The specification and drawings are, accordingly, to be regarded in an illustrative rather than a restrictive sense.

## Claims

1. A compression-decompression method used for processing a frame of data in multimedia animation, comprising the steps of:
setting a predetermined criteria;
creating a sprite based frame related to said data;
performing a pixel-by-pixel comparison of said data with a preceding frame for creating a frame differences based frame;
determining a first data rate of said sprite based frame and a second data rate of said frame differences based frame;
comparing said first and said data rates to said predetermined criteria; and
selecting one of said sprite based frame and said frame differences based frame as a compressed frame.

2. The method of claim 1 wherein said determining step further determines a first pixel rate of said sprite based frame and a second pixel rate of said frame differences based frame, and wherein said comparing step further compares said first and said second pixel rates to said predetermined criteria.

3. The method of claim 1 or claim 2 further comprising:
ascertaining if said data corresponds to a key frame; and
omitting said performing, said determining, said comparing and said selecting steps if said data is a key frame.

4. The method of claim 1 or claim 2 wherein said selected frame is stored on a storage medium.

5. The storage medium of claim 4 comprising a CDROM.

6. The storage medium of claim 4 comprising a network server.

7. The method of any preceding claim wherein said selected frame is transmitted over a data network.

8. The method of claim 7 wherein said data network is the Internet.

9. The method of claim 7 wherein said data network is a local area network.

10. A multimedia system for processing a frame of data in multimedia animation, the multimedia system comprising means for performing the method as claimed in any preceding claim.
